# EUROPEAN PATENT APPLICATION

(11) **EP 1 705 582 A1**
(43) Date of publication of application: **27.09.2006**
(21) Application number: 05425173.1
(22) Date of filing: 24.03.2005
(51) Int. Cl.: G06F 17/30, G06F 9/46

(54) **System and method for optimising use of data management programs and computer program product thereof**

(71) Applicant: Logimax S.r.l., 10100 Torino (IT)
(72) Inventor: Russo, Vito, 10100 Torino (IT); Giordano, Massimo, 10100 Torino (IT)
(74) Representative: Robba, Pierpaolo

(57) **Abstract**

The present invention refers to a system (10), and corresponding method, for optimising use of data management programs. System (10) comprises client type computers (12, 14, 22, 24) and server type computers (15), interconnected through a network of general type, whether a local type network (LAN or Local Area Network) (20a) or a network based on remote type interconnections (ADSL or Asymmetrical Digital Subscriber Line or other type) (20b). Both the client (12, 14, 22, 24) and the server (15) comprise the same data management package having one or more management modules that, preferably, are configured for assigning the processing of the same management module to the client (12, 14, 22, 24) or to the server (15) according to predetermined parameters. Thanks to the system (10) as described, and to the corresponding method, it is possible to obtain the maximum of possible performances from the data management package, owing to the fact that, by attributing the processing of the same management module to the client (the 12, 14, 22, 24) or to the server (15), it is possible to limit the traffic of data through the network (20a, 20b).

## Description

### Technical field

The present invention relates, in general, to a system and method for optimising use of data management programs in a context of a network of computers. In particular, the present invention relates to a system and method arranged to optimise the processing load distribution between computers or processors, for example between "client" type computers and "server" type computers, interconnected by means of a general type network, as for example a local network (LAN or Local Area Network) or a network based on interconnections of remote access type (ADSL or Asymmetrical Digital Subscriber Line or other types of remote access networks).

In the course of the present description the term data management programs is used in order to indicate computer programs or packages generally comprising a plurality of program modules or computer routines and arranged to:
- manipulate, in the course of a single computer routine, volumes of data usually of high-volume type (as for example Mbytes of data), in other words computer programs arranged to execute transactions that may provide the transfer of high-volume data, through the network;
- execute, for instance, calculations of a simple type (as for example sums, subtractions, multiplications, divisions);
- manage the update of at least one data base (Data Base or DB) associated to a server connected to the network.

### Background art

Data management programs are known in the art (named packages or business logics); for example programs are known for the management of salaries, wages, accounts, warehouses, or for the management or preparation of income tax returns, etc.

Such data management programs, as for instance program for the preparation of income tax returns, comprise a set of data modules arranged to manipulate information or data inputted by a user or loaded from a Data Base in order to fill in automatically, for example, several sections or tables, like the "tables" of the income tax return.

When considering, for instance, the computer program product named "Expert", commercialised by the Applicant, this product comprises data management programs configured for the preparation of the income tax return. The product provides a package to be installed on a client and a different package to be installed, as an alternative, on a server. Upon installation, it is decided which package to store and to render operative, alternatively on the client or on the server.

A problem of such a solution is that, irrespectively of the processing capabilities of the client machine, of the server machine and of the network, the processing of the entire package can be effected only and exclusively on the machine on which the data management program (application) in its whole is installed.

In other words, in case the program has been installed on the server, whatever are the processing capabilities of the client and the transport capability of the network, the program modules will always be processed by the server and, viceversa, in case the program has been installed on the client, even in the case of complex processing and/or high-volume data to be transferred through the network, such processing will be managed by the client.

As a consequence, whatever is the architectural context in which the package is installed, said package will be managed only by a single type of resources, either those of the client or those of the server, and every possible optimisation that allows to always obtain the maximum of performances or possible performances within the architectural context in which the package is installed will be prevented.

For example, maximum of the performances can mean the fact of limiting the traffic of data between the Data Base and the data module that manipulates such data in order not to overload the network interconnecting the client and the server.

In short, the Applicant notes that the background art does not provide data management programs or packages arranged to optimise the use of available resources in a mixed architectural context of installation (local area network and remote type network) or in a not mixed architectural context of installation (local area network or remote access type network or standalone).

### Disclosure of the invention

It is an object of the present invention to provide a system and a method that allow to overcome the flexibility limits of the background art as described.

This object is achieved by the system for optimising the use of data management programs as claimed in the claims that follow.

The present invention relates also to a method, as well as to a computer program product loadable in the memory of at least one computer and including software code portions for performing the steps of the method of the invention when the product is run on at least one computer. Reference to such a computer program product as used herein is meant as equivalent to the reference to computer readable means containing computer instructions arranged to control a computer system for implementing the method according to the invention. Reference to "at least one computer" is meant to highlight the possibility for the method of the invention to be carried out in a decentralised and/or modular manner over a plurality of computers. The claims are an integral part of the teaching according to the present invention.

According to a preferred embodiment, the system according to the invention comprises at least one server and at least one client connected to the server through a network, as for example a local area network or an ADSL-type remote access type. Both the server and the client comprise the same data management package and are arranged to assign the processing of any single program module comprised on the package to the client or to the server, on the basis of parameters indicative of the weight of the transactions associated to any single program module.

According to a further characteristic of the present invention, the program modules of the package comprise a cost function arranged to determine, in a dynamic way, on which computer, client or server, the transactions requested by the user are to be carried out.

According to another characteristic of the present invention, the program modules are arranged to collect information indicative of the "distance" between where the data to be manipulated reside (server) and where the user (client), that has requested the transaction, resides (location in which there is provided, for example, a GUI or Graphical User Interface for displaying the data manipulated or to be manipulated); on the basis of the information "distance" each program module is arranged to determine if it is more convenient to transfer the data onto the client and, therefore, to process them locally on the client or to transfer only the result of the transaction carried out, in this case, by the server. The fact that the program modules on the client and on the server are identical, but the information "distance", measured on the client and the one measured on the server are different, allows the program module involved in the processing to determine where effectively to carry out the data processing and therefore to optimise the use of the resources (for example network, client or server resources).

Still according to another characteristic of the present invention the parameters indicative of the weight of the transactions associated to a single module of the data management package comprise:
- parameters indicative of the distance between the single computer connected to the network and the Date Base to be updated;
- parameters indicative of the volume of data to be exchanged with the Date Base through the network.

### Brief description of Drawings

These and further features and advantages of the present invention will appear more clearly from the following detailed description of a preferred embodiment, provided by way of non limiting examples with reference to the attached figures, wherein components designated by same or similar reference numerals indicate components having same or similar functionality and construction and wherein:
Fig. 1 shows one general architectural outline of the system according to the invention; and
Fig. 2 shows a flow chart outlining the method of operation of the system according to the invention.

### Best Mode of Carrying Out the Invention

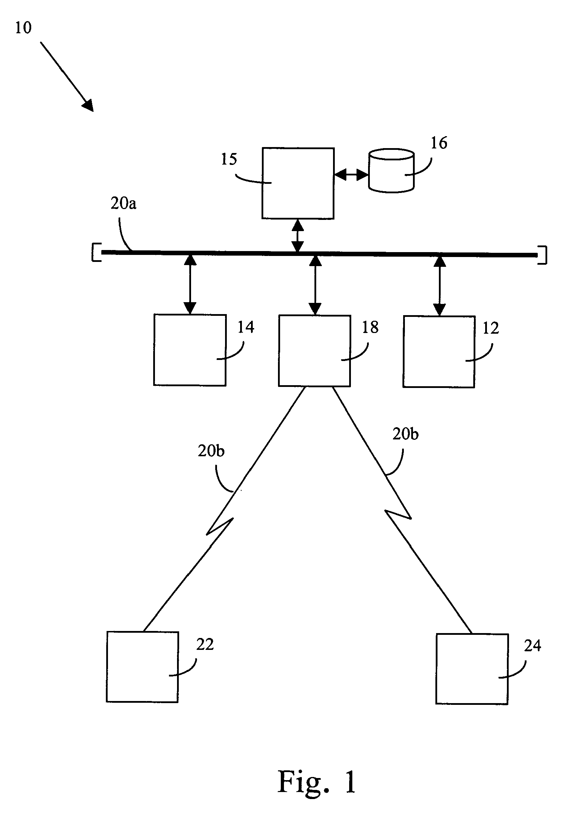

With reference to Fig. 1 an architecture or system 10 for the optimisation of the use of data management programs comprises, for example, a server type computer (server) 15, known per se, and a set of client type computers (clients) 12, 14, 22, 24 connected to the server 15 by means of an interconnection network (network) 20a, 20b, of known type.

The server 15, for example, comprises a hardware comprised of an electronic computer having a microprocessor of the Pentium 4 family and a random access memory (RAM) of at least 512 Mbytes, an operating system of the type Windows XP Professional, and is associated to a set of disc units having a memory storage, for example, of some Gbytes and arranged to store, for example, a reference data base (Data Base) 16. The server 15 comprises program modules, of known type, arranged to manage the reading and writing of the information or data of the Date Base 16. Server 15 further comprises, as it will be disclosed in detail later on, at least a data management package (Business Logic) for the management of determined functions upon request, for example, by a user. The server 15 further comprises, for example, a graphical interface for a search module such as a browser (Graphical User Interface or GUI for browser) usable by a user in order to remotely access the server 15 by means of a browser of known type.

Clients 12, 14, 22, 24 comprise, for example, types of Clients having different characteristics.

For example, the reference numeral 12, according to a preferred embodiment, indicates a Client having high performances (Rich Client on LAN), connected to the server 15 by means of a local network having high performances (LAN) 20a, for example a network arranged to transfer data with a speed of 100 Mbit/second, and comprising a hardware comprised of a microprocessor of the Pentium 4 family and a random access memory (RAM) of at least 256 Mbytes, and an operating system of the type Windows XP Professional.
The Rich Client on LAN 12 comprises, in the exemplary embodiment described herein, program modules for the management of the graphical user interface (GUI or Graphical User Interface for client), of known type, and, as it will be disclosed in detail later on, a data management package (Business Logic) having the same structure and characteristics as the data management package (Business Logic) installed on the server 15.

The reference numeral 22, according to a preferred embodiment, indicates a Client having high performances (Rich Client on ADSL) comprising a hardware comprised of a microprocessor of the Pentium 4 family and a random access memory (RAM) of at least 256 Mbytes, and an operating system of the type Windows XP Professional.
The Rich Client on ADSL 22 is connected to the server 15 by means of a network server 18 and a remote type connection of ADSL type 20b, known per se, and is arranged, for example, to exchange data with the server 15 at a speed of 1 Mbit/second.
The Rich Client on ADSL 22 comprises, in the exemplary embodiment described herein, program modules for the management of the graphical user interface (GUI or Graphical User Interface for client), of the same type as those installed on the Rich Client on LAN 12, and, as it will be disclosed in detail later on, a data management package (Business Logic) having the same structure and characteristics as the data management package (Business Logic) installed on the server 15 and on the Rich Client on LAN 12.
The GUI for client of the Rich Client on LAN 12 and the one of the Rich Client on ADSL 22, equivalent to each other, are arranged to allow the use of the Business logic by a user.

The reference numeral 14, according to a preferred embodiment, indicates a Client having poor performances (Poor Client on LAN) connected to the server 15 by means of the LAN 20a and comprising a hardware comprised of a microprocessor of the Pentium 2 family and a random access memory (RAM) of at least 64 Mbytes, and an operating system of the type Windows XP Professional.
The Poor Client on LAN 14 comprises, in the exemplary embodiment described herein, a search program (browser), of known type, and, as it will be disclosed in detail later on, a data management package (Business Logic) having the same structure and characteristics as the data management package (Business Logic) installed on the server 15 and the clients 12 and 22.

The reference numeral 24, according to a preferred embodiment, indicates a Client having poor performances (Poor Client on ADSL), connected to the server 15 by means of the network server 18 and of the remote type connection of ADSL type 20b, and comprising a hardware comprised of a microprocessor of the Pentium 2 family and a random access memory (RAM) of at least 64 Mbytes, and an operating system of the type Windows XP Professional.
The Poor Client on ADSL 24 comprises, in the exemplary embodiment described here, a search program (browser), of known type, arranged to use, in a known way, the graphical interface GUI installed on the server 15, and, as it will be disclosed in detail later on, a data management package (Business Logic) having the same structure and characteristics as the data management package (Business Logic) installed on the server 15 and on the clients 12, 14 and 22. The respective browsers of the Poor Client on LAN 14 and of the Poor Client on ADSL 24, equivalent to each other, are arranged to allow the use of the Business logic by a user.

To summarise, on the basis of the exemplary embodiment described above, the server 15 and the various clients, 12, 14, 22, 24 comprise program modules according to the following table 1, from which it results that substantially the same Business Logic is stored, for example, on all computers of client or server type 12, 14, 15, 22, 24 connected either to the Local Area Network 20a or to the remote type network (ADSL) 20b:

**Table 1**

| TYPE OF COMPUTER | PROGRAM MODULES |
|---|---|
| Rich Client | GUI |
| Rich Client, Poor Client, Server | Business Logic |
| Server | Browser GUI |
| | Data Base Management |

The Business Logic, according to a preferred embodiment, comprises, for example, one or more data program modules (program modules) wherein each program module is configured for carrying out a determined function upon request, for example, by a user. As an example, in the case of a Business Logic for the preparation of income tax returns, the program modules can be divided in classes or set of routines, wherein each class is configured for the filling-in by a user, of a determined table of the income tax return. Each class may comprise one or more routines, each routine having, for example, different characteristics in respect of the number of data to be read from or to be processed and to be written on the Date Base 16.
Each routine of each class comprises, in the preferred embodiment:
- a set of optimisation parameters;
- one or more cost functions;
- one or more data modules arranged to manipulate data and/or information to be read from or to be written on the Date Base (16).

The optimisation parameters of the set are, in the preferred embodiment, indicative of:
- architectural characteristics of installation;
- number (size) of data managed by the routine and subject to be transferred through the network as a result of the execution of the routine itself.
For example, the above described optimisation parameters can comprise:
- a first parameter (ParamInstall) indicative of the "distance" of the client, 12, 14, 22, 24 or of the server 15 from the Date Base 16; this parameter Paramlnstall, on the basis of the example of Fig.1, can be assigned, during installation of the Business Logic, respectively to the clients, 12, 14, 22, 24 and to the server 15 according to the following example shown in Table 2:

**Table 2**

| Paramlnstall (distance) | ASSIGNED TO: |
|---|---|
| 0 | Server |
| 1 | Rich Client on LAN |
| 2 | Rich Client on ADSL |
| 3 | Poor Client on LAN |
| 4 | Poor Client on ADSL |

- a second parameter (ParamPeso) indicative of the size or volume of data or information to be read from or to be written on the data base and that are subject to be transferred through the network as a result of the activation of the routine; such a parameter ParamPeso, on the basis of the example of Fig.1, can be assigned to the different routines according to the following example shown in Table 3:

**Table 3**

| ParamPeso | Volume of data |
|---|---|
| 1 | ≤ 1 Mbyte |
| 2 | > 1 Mbyte |

The first parameter (ParamInstall), preferably, is assigned, during installation, to the computer (client or server) on which the Business Logic is loaded, but nothing prevents, as it is easily comprehensible to one skilled in the art, that such a parameter can be repeated on every routine of the Business Logic during installation on a determined client or on a determined server in a determined architectural context.

The second parameter (ParamPeso), preferably, is assigned, during the design and development phase of the Business Logic, to each routine by the person or persons assigned to the design and development of the Business Logic. Of course, nothing prevents, as it is easily comprehensible to one skilled in the art, that such a parameter ParamPeso can be assigned during the design phase to each class or set of classes of the Business Logic.

Obviously, as it will be apparent from the following description, the finer is the granularity in allocating the optimisation parameters, the higher is the degree of optimisation that can be reached in the use of data management programs in a determined architectural context of installation.

The cost function is a function that is checked by each routine pertaining to the Business Logic before any activation of a data module and, as it will be disclosed in detail later on, is configured for managing the selective activation, upon variation of the optimisation parameters, of the data module on the client, respectively, 12, 14, 22 or 24, on which the user has activated the Business Logic, or on the server 15.
The cost function, in the preferred embodiment, comprises:
- an assignation function arranged to assign a value "true" or "false" to a variable (control variable) on the basis of the optimisation parameters (Function Convenient);
- an activation function of the data module or a transfer function to another routine upon variation of the value assigned to the control variable (Function Activa).

The cost function (Function Convenient) when considering, for example, the system of Fig. 1, can have the shape given in the following block of instructions that is intended only as a non-limiting example:
Function Convenient (ParamPeso)
if ParamInstall = 0 or 1
return true;
if ParamInstall = 2 or 3 or 4
if ParamPeso = 1
return true
else
return false;

As it is easily comprehensible to one skilled in the art, the cost function activated on different clients, respectively on the Rich client on LAN 12, on the Rich client on ADSL 14, on the Poor client on LAN 22 or on the Poor client on ADSL 24 will be such as to supply different values, i.e. "false" or "true'' values, as a function of the optimisation parameters.

The Function Activa, for example, is a function arranged to verify the value of the control variable in output from the Function Convenient and to activate the processing of the data module, in the case in which, for example, the control variable has a value "true" or to transfer the processing activation, for example, to the server 15, in the case the control variable has a value "false".

The data module arranged to manipulate data and/or information comprises the actual program function of the routine pertaining to the Business Logic and is activated, in the preferred embodiment, by a cost function residing on the same activation computer, as a result of the fact that the control variable has assumed the value "true".

In brief, preferably, each routine is configured for determining the convenience to manage a determined data management request on the same computer wherein the request has been made or to transfer the data management request to another computer, as for example to the server 15.

In order to describe the operation, reference is made to a Business Logic for the preparation of an income tax returns, but it is apparent that this choice is made only for simplifying the description and by way of a non-limiting example and that the same logic of operation is applicable, in general, to any data management package that can be installed in architectures of the described type.
The Business Logic incomes tax return comprises, for example, a Class (set of routines) called ClsQuadro A that is configured for the filling-in, for example, of the Table or Form A of the Italian income tax return.
The ClsQuadro A comprises, for example, two routines, in which each routine comprises, for example, the optimisation parameters, a cost function, a data module.

The first routine, called, for example, Read Table, is configured for supplying the data of Table A to the graphical interface or GUI; such data, for example, are constituted of 20 data fields of 8 byte and therefore, during the design phase the first routine will receive, for example, a parameter ParamPeso of value 1;

The second routine, to be executed in sequence with the first one, called, for example, Update Table is configured for writing the data of Table A on the Date Base 16 and for calculating a set of information or data to be recorded, for example, on other Tables or Forms of the income tax return that interact with Table A; the routine Update Table, involving various Tables, is configured for manipulating a high volume of data (1,5 Mbytes, for example) and therefore, during the design phase, will receive, for example, a parameter ParamPeso of value 2.

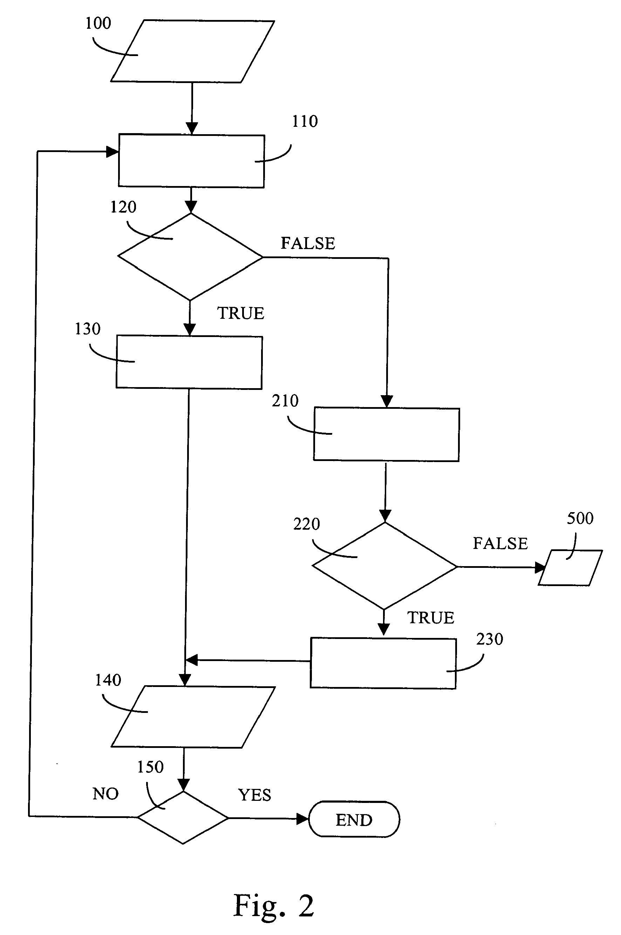

The operation of the system 10 as described above, and, therefore, with reference to the Business Logic of the income tax return, is the following.
It is provided, for example, that a user located on a Rich Client on ADSL 22 requests the filling-in Table A (step 100).
The client graphical interface GUI calls, according to the present exemplary embodiment, the ClsQuadro A (step 110) and, in particular, the routine Read Table.
The routine Read Table of the ClsQuadro A interrogates, on the basis of the described architecture, the respective cost function (step 120).
According to the example, the client is of the type Rich Client on ADSL 22 (Fig. 1 and Fig.2), and therefore the parameter ParamInstall assigned to such a client is of value 2; the parameter ParamPeso assigned to the routine Read Table, as anticipated, is of value 1. The outcome of the function cost (step 120), as exemplified, will be "true" and therefore the processing of the data module of the routine Read Table will be executed on the Rich Client on ADSL 22 (step 130), i.e. the same computer wherein the request has been made, and the output of the processing will be displayed for the user by means of the GUI on the client (step 140). Subsequently, following a verification step (step 150) in order to determine if the ClsQuadro A has been completed, the negative output of the verification (step 150 with output NO) is arranged to activate the client GUI that calls, according to the present exemplary embodiment, the ClsQuadro A (step 110) and, in particular, the routine Update Table.
The routine Update Table of the ClsQuadro A interrogates, on the basis of the described architecture, the respective cost function (step 120).
On the basis of the example, the client is of the type Rich Client on ADSL 22, and therefore the parameter ParamInstall assigned to such a client is of value 2 but, in this case, the parameter ParamPeso assigned to the routine Update Table, as anticipated, is of value 2. The output of the cost function (step 120) will be "false" and therefore the control of the routine Update Table will be transferred, for example on the basis of the described architecture, to the server 15 that in turn will activate the ClsQuadro A and, in particular, the routine Update Table (step 210) resident on the server 15. The routine Update Table of the server 15, by having the same structure of routine Update Table present on the Rich Client on ADSL 22, interrogates in its turn the respective cost function (step 220).
The output of the cost function (step 220), in this case, being the parameter ParamInstall assigned to the server 15 of value 0, is "true" and therefore the processing of the data module of the routine Update Table will be executed on server 15 (step 230) and the output of the processing will be displayed for the user by means of the client GUI (step 140).
Of course, in other embodiments, by assuming system architectures having servers of different level and Date Bases structured on different hierarchical levels, the output of the cost function (220), on the basis of different parameters other than those exemplified, could also be "false" and therefore the control should be transferred to other computers (step 500).
The step 140, still according to the exemplary embodiment, will be followed by the verification step (step 150) in order to determine if the ClsQuadro A has been completed, the positive output of the verification (step 150 with output YES) will complete the ClsQuadro A of the example (step END).

From the operation flow chart, described above, it is apparent that each computer connected to the network (20a or 20b), whether a Rich client on LAN 12 or a Rich client on ADSL 14, or a Poor client on LAN 22, or a Poor client on ADSL 24, or a server 15 comprises the same Business Logic configured for interrogating a determined cost function (step 120 or step 220), as a preliminary step before any possible processing of data modules.
The output of the cost function determines the fact that the effective processing of the data modules of a determined routine or class is carried out on a determined client or transferred to a determined server.

In the embodiment described above reference is made to a system architecture 10 comprising clients on which it is installed however the whole Business Logic. It is easily comprehensible to one skilled in the art that, in other embodiments, there can also be clients, connected to the network, that do not contain the Business Logic. In such an architecture, such clients will be configured for directly accessing the server which will in any case use the Business Logic as described and will therefore interrogate the cost function and execute the data module requested by such clients.

The embodiment described above makes reference to a system architecture 10 in which a single server is provided. It is easily comprehensible to one skilled in the art that, in other embodiments, it could be possible to configure a plurality of servers connected to the network, each of them having different parameters of the ParamInstall type so as to allow a cost function opportunely adapted to transfer the activation of the data module from a server having a low priority ("greater distance" from the Date Base) to one having higher priority ("shorter distance" from the Date Base).

In the embodiment described above, examples of values for ParamInstall, ParamPeso, and one determined cost function configured, for using such values, have been disclosed in Table 2 and 3. It is easily comprehensible to one skilled in the art that, in other embodiments, the parameters and the cost function can be different without departing from the scope of the invention as claimed.

The cost function in the preferred embodiment uses two parameters, namely representing the installation context and the size of the data to be transferred through the network as a result of the activation of a determined class or routine of the Business Logic. It is easily comprehensible to one skilled in the art that, in other embodiments, for example in contexts in which the computers are equivalents, the parameters can be reduced to a single parameter representative of the size of the data to be transferred through the network and the cost function can be reduced to a cost function that uses such a single parameter.

In general, thanks to the described method it is possible to obtain, in the architectural context as exemplified, the maximum of the effectiveness or performances of the installed Business Logic or Package. In the present description, maximum of the performances means to limit the traffic of data between the Date Base and the graphical interface (GUI) that uses said data, in order not to overload the interconnection network (connection lines) between the client and the server to which the Date Base is associated.

Obvious changes and variations are possible to the above disclosure, as regards dimensions, shapes, materials, components, circuit elements, connections and contacts, as well as details of circuitry, described construction and operation method without departing from the scope of the invention as defined by the claims that follow.

## Claims

1. System for optimising use of data management programs comprising
- at least one server type computer (15) configured for processing data and for reading information from and for writing information on a Date Base (16) associated to said server (15);
- at least one client type computer (12, 14, 22, 24) configured for processing data and for exchanging data with said at least one server (15) through an interconnection network (20a, 20b);
**characterised in that**
- said at least one client (12, 14, 22, 24) and said at least one server (15) respectively comprise at least one first management module and at least one second management module, substantially identical to each other, arranged to manage determined requests for managing information to be read from and/or to be written on said Data Base (16), and respectively provided with
- at least one data module arranged to manipulate data;
- at least one convenience determination module configured for determining, on the basis of predetermined parameters, the convenience to activate said data module of said at least one first management module or to transfer, through said network, the management of said determined requests for managing information to said second management module.

2. System according to claim 1 **characterised in that** said predetermined parameters comprise
- at least one parameter indicative of the volume of information, associated to said at least one first management module and second management module, to be read from and/or to be written on said Data Base (16).

3. System according to claim 1 or 2 **characterised in that** said predetermined parameters comprise
- at least one parameter indicative of the distance of said at least one client (1, 14, 22, 24) and of said at least one server (15) from said Data Base (16).

4. System according to any one of the claims from 1 to 3 **characterised in that** said at least one client (12, 22) comprises a graphical interface (GUI) associated to said at least one first management module configured for managing said determined information management requests.

5. Method for optimising use of data management programs in an interconnection network wherein at least one server type computer (15) is provided configured for processing data and for reading information from and for writing information on a Date Base (16) associated to said server (15) and at least one client type computer (12, 14, 22, 24) is provided configured for processing data and for exchanging data with said at least one server (15) through said interconnection network (20a, 20b), **characterised by** the steps of
- storing on said at least one client (12, 14, 22, 24) and on said at least one server (15) respectively at least one first management module and at least one second management module substantially identical to each other;
- activating said first management module on the basis of determined requests for managing information to be read from and/or to be written on said Data Base (16);
- determining, on the basis of predetermined parameters, the convenience to manage said determined requests for managing information on said client (12, 14, 22, 24) or to transfer said determined requests for managing information to said second management module of said server (15) through said interconnection network (20a, 20b).

6. Method according to claim 5 **characterised in that** said step of determining the convenience to manage said determined requests for managing information on said client (12, 14, 22, 24) or to transfer said determined requests for managing information to said second management module comprises the step of
- associating to said at least one first and second management module a parameter, indicative of the volume of information to be read from and/or to be written on said Data Base (16), and to be used for determining said convenience.

7. Method according to claim 5 or 6 **characterised in that** said step of determining the convenience to manage said determined requests for managing information on said client (12, 14, 22, 24) or to transfer said determined requests for managing information to said second management module comprises the step of
- associating to said al least one first and second management module a parameter, indicative of the distance of said at least one client (12, 14, 22, 24) and said at least one server (15) from said Data Base (16), and to be used for determining said convenience.

8. Method according to any one of the claims from 5 to 7 **characterised in that** said step of storing comprises the step of
- storing at least one data module arranged to manipulate data associated to said first management module and second management module.

9. Method according to any one of the claims from 5 to 8 **characterised by** the step of
- storing on said at least one client (12, 22) at least one graphical interface (GUI) associated to said at least one first management module and configured for managing said determined requests for managing information.

10. Computer program product or set of computer program products loadable in the memory of at least one electronic computer and comprising software code portions arranged to perform the method according to any one of the claims from 5 to 9.

11. Computer program product or set of computer program products as claimed in claim 10 embodied on a computer readable medium.
